# EUROPEAN PATENT APPLICATION

(11) **EP 4 131 545 A1**
(43) Date of publication of application: **08.02.2023**
(21) Application number: 21782331.9
(22) Date of filing: 24.03.2021
(51) Int. Cl.: H01M 10/0566, H01M 10/0587, H01M 50/10, H01M 50/183

(54) **CYLINDRICAL BATTERY**

(30) Priority: 30.03.2020 JP 2020059700
(71) Applicant: SANYO Electric Co., Ltd., Daito-shi Osaka 574-8534 (JP)
(72) Inventor: MIHARA, Satoru, Chuo-ku, Osaka-shi, Osaka 540-6207 (JP); MANTOKU, Norie, Chuo-ku, Osaka-shi, Osaka 540-6207 (JP)
(74) Representative: Novagraaf International SA
(86) International application number: PCT/JP2021/012178
(87) International publication number: WO 2021/200439

(57) **Abstract**

The purpose of the present disclosure is to provide a cylindrical battery capable of reducing leakage of electrolyte to outside the battery. A cylindrical battery according to one embodiment comprises: an electrode assembly obtained by wrapping a positive electrode and a negative electrode around a separator; an electrolyte; a bottomed cylindrical outer can (20) that houses the electrode assembly and the electrolyte; a sealing body (30) that plugs the opening of the outer can (20); and an annular gasket (40) that is inserted between the outer can (20) and the sealing body (30). The sealing body (30) is anchored by being crimped to an open end of the outer can (20) via the gasket (40). The gasket (40) has a projection (40A) formed on the outer peripheral surface thereof, the projection protruding outside radially and the projection (40A) is in contact with the inner peripheral surface of the open end of the outer casing (20).

## Description

### TECHNICAL FIELD

The present disclosure generally relates to a cylindrical battery.

### BACKGROUND ART

In a cylindrical battery, a sealing assembly that seals an opening of an exterior housing can is fixed by crimping to the opening of the exterior housing can with a gasket interposed between the sealing assembly and the exterior housing can (for example, PATENT LITERATURE 1). In a manufacturing process of a cylindrical battery, an electrode assembly is first inserted into an exterior housing can, a grooved part for supporting a sealing assembly is next formed in the vicinity of an opening of the exterior housing can, and then an electrolyte is injected into the exterior housing can. The injected electrolyte gradually saturates the electrode assembly, and a liquid level position of the electrolyte falls from above to below the grooved part. At this time, the electrolyte may adhere to and remain on an inner peripheral face above the grooved part of the exterior housing can.

### CITATION LIST

### PATENT LITERATURE

PATENT LITERATURE 1: International Publication No. WO 2016/157749

### SUMMARY

### TECHNICAL PROBLEM

In the manufacturing process of a cylindrical battery, when the sealing assembly is fixed by crimping with the gasket interposed between the sealing assembly and the exterior housing can in a state where the electrolyte adheres to the inner peripheral face above the grooved part of the exterior housing can, the adhered electrolyte may leak out to outside of the battery. The leaked electrolyte causes rust to form on the exterior housing can and the sealing assembly. The leakage of the electrolyte causes variations in electrolyte amount of the cylindrical battery.

It is an advantage of the present disclosure to provide a cylindrical battery that can reduce leakage of an electrolyte to outside of the battery.

### SOLUTION TO PROBLEM

The cylindrical battery of an aspect of the present disclosure is a cylindrical battery comprising: an electrode assembly in which a positive electrode and a negative electrode are wound with a separator interposed between the positive electrode and the negative electrode; an electrolyte; a bottomed cylindrical exterior housing can that houses the electrode assembly and the electrolyte; a sealing assembly that seals an opening of the exterior housing can; and an annular gasket that is interposed between the exterior housing can and the sealing assembly, the sealing assembly being fixed by crimping to an opening end of the exterior housing can with the gasket interposed between the sealing assembly and the exterior housing can, wherein a projection projecting outward in a radial direction is formed on an outer peripheral face of the gasket, and the projection comes into abutment with an inner peripheral face of the opening end of the exterior housing can.

### ADVANTAGEOUS EFFECTS OF INVENTION

According to an aspect of the present disclosure, it is possible to reduce the leakage of the electrolyte to the outside of the battery. This can reduce variations in electrolyte amount of the cylindrical battery.

### BRIEF DESCRIPTION OF DRAWING

FIG. 1 is a sectional view of a cylindrical battery of an example of an embodiment.
FIG. 2 is a sectional view illustrating a gasket before a sealing assembly is inserted into an exterior housing can in an example of an embodiment.
FIG. 3 is a sectional view illustrating a gasket before a sealing assembly is inserted into an exterior housing can in another example of an embodiment.
FIG. 4 is a sectional view illustrating a gasket before a sealing assembly is inserted into an exterior housing can in another example of an embodiment.
FIG. 5A is a diagram for describing an assembly process of a sealing assembly.
FIG. 5B is a diagram for describing an assembly process of a sealing assembly.
FIG. 5C is a diagram for describing an assembly process of a sealing assembly.

### DESCRIPTION OF EMBODIMENTS

Hereinafter, embodiments of the present disclosure will be described with reference to the drawings. The shapes, materials, and numbers described below are examples for explanation, and may be appropriately modified with specifications of cylindrical batteries. Hereinafter, similar elements will be represented by the same reference signs in all drawings and described accordingly.

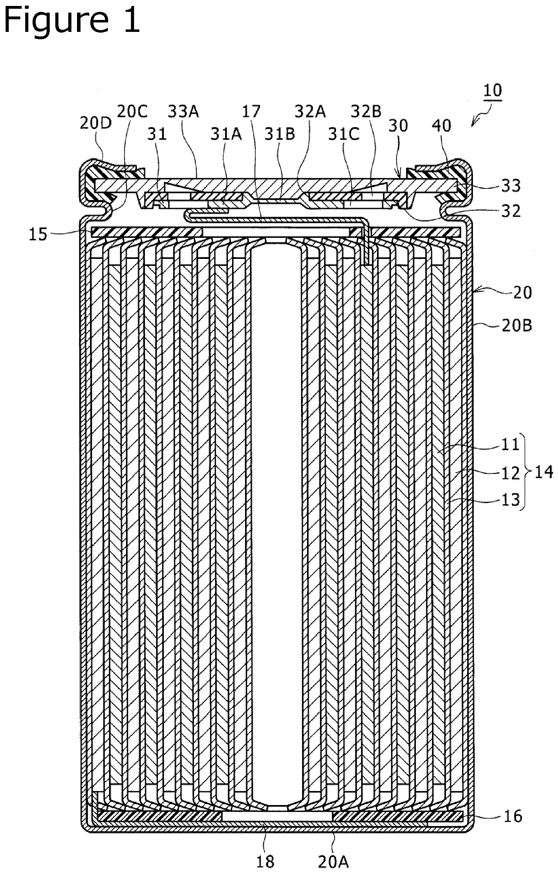

A cylindrical battery 10 of an example of an embodiment will be described with reference to FIG. 1. FIG. 1 is a sectional view of the cylindrical battery 10.

As illustrated in FIG. 1, the cylindrical battery 10 comprises an electrode assembly 14, an electrolyte, an exterior housing can 20 that houses the electrode assembly 14 and the electrolyte, and a sealing assembly 30 that seals an opening of the exterior housing can 20. The electrode assembly 14 includes a positive electrode 11, a negative electrode 12, and a separator 13, and has a wound structure in which the positive electrode 11 and the negative electrode 12 are spirally wound with the separator 13 interposed therebetween. Hereinafter, for convenience of description, the sealing assembly 30 side (an opening side of the exterior housing can 20) of the cylindrical battery 10 will be defined as the "upper side", and a bottom face part 20A side of the exterior housing can 20 will be defined as the "lower side."

The positive electrode 11 has a positive electrode core, and a positive electrode mixture layer formed on at least one face of the core. For the positive electrode core, there can be used a foil of a metal such as aluminum or an aluminum alloy, which is stable in a potential range of the positive electrode 11, a film in which such a metal is provided on a surface layer thereof, and the like. The positive electrode mixture layer includes a positive electrode active material, a conductive agent such as acetylene black, and a binder such as polyvinylidene fluoride, and is preferably formed on each side of the positive electrode core. For the positive electrode active material, there is used, for example, a lithium-transition metal composite oxide. The positive electrode 11 can be manufactured by applying a positive electrode mixture slurry including a positive electrode active material, a conductive agent, a binder, and the like on the positive electrode core, drying the resulting coating film, and then compressing it to form a positive electrode mixture layer on each side of the core.

The negative electrode 12 has a negative electrode core, and a negative electrode mixture layer formed on at least one face of the core. For the negative electrode core, there can be used a foil of a metal such as copper or a copper alloy, which is stable in a potential range of the negative electrode 12, a film in which such a metal is provided on a surface layer thereof, and the like. The negative electrode mixture layer includes a negative electrode active material and a binder such as styrene-butadiene rubber (SBR), and is preferably formed on each side of the negative electrode core. For the negative electrode active material, there is used, for example, graphite, or a silicon-containing compound. The negative electrode 12 can be manufactured by applying a negative electrode mixture slurry including a negative electrode active material, a binder, and the like on the negative electrode core, drying the resulting coating film, and then compressing it to form a negative electrode mixture layer on each side of the core.

For the electrolyte, a non-aqueous electrolyte is used, for example. The non-aqueous electrolyte includes a non-aqueous solvent, and an electrolyte salt dissolved in the non-aqueous solvent. For the non-aqueous solvent, there can be used esters, ethers, nitriles, amides, a mixed solvent containing at least two of those mentioned above, and the like. The non-aqueous solvent may also contain a halogen substitute in which at least a part of hydrogen of these solvents is substituted with a halogen atom such as fluorine. For the electrolyte salt, there is used, for example, a lithium salt such as LiPF₆. The kind of the electrolyte is not limited to a particular kind of electrolyte, but may also be an aqueous electrolyte.

The cylindrical battery 10 has insulating plates 15 and 16 arranged on the upper and lower sides of the electrode assembly 14, respectively. In the example illustrated in FIG. 1, a positive electrode lead 17 connected to the positive electrode 11 extends to the sealing assembly 30 side through a through hole of the insulating plate 15, and a negative electrode lead 18 connected to the negative electrode 12 extends to the bottom face part 20A side of the exterior housing can 20 along the outside of the insulating plate 16. The positive electrode lead 17 is connected, by welding or the like, to a bottom face of an internal terminal plate 31 forming the sealing assembly 30, and the external terminal plate 33 serves as a positive electrode external terminal. The negative electrode lead 18 is connected, by welding or the like, to an inner face of the bottom face part 20A of the exterior housing can 20, and the exterior housing can 20 serves as a negative electrode external terminal.

The exterior housing can 20 is a bottomed cylindrical metallic container. A gasket 40 is provided between the exterior housing can 20 and the sealing assembly 30 and the sealing property of the interior of the cylindrical battery 10 is ensured. The exterior housing can 20 has a grooved part 20C formed by causing a part of a lateral face part 20B to project inward and configured to support the sealing assembly 30. The grooved part 20C is preferably formed into an annular shape along a circumferential direction of the exterior housing can 20, and supports the sealing assembly 30 on its upper face. The sealing assembly 30 supported on the grooved part 20C is fixed to an upper part of the exterior housing can 20 by being crimped to an opening end of the exterior housing can 20. A shoulder part 20D is formed into an annular shape in the opening end of the exterior housing can 20.

The sealing assembly 30 is a disk-shaped member having a current interrupt mechanism. The sealing assembly 30 has a stacked structure of the internal terminal plate 31, an insulating plate 32, and the external terminal plate 33 in this order from the electrode assembly 14 side. The internal terminal plate 31 is a metal plate including an annular part 31A to which the positive electrode lead 17 is to be connected, and a thin central part 31B that is disconnected from the annular part 31A when an internal pressure of the battery exceeds a predetermined threshold. A vent hole 31C is formed in the annular part 31A.

The external terminal plate 33 is disposed to face the internal terminal plate 31 with the insulating plate 32 interposed therebetween. In the insulating plate 32, an opening 32A is formed at a central part in the radial direction, and an vent hole 32B is formed in a portion overlapping with the vent hole 31C in the internal terminal plate 31. The external terminal plate 33 has a vent part 33A that ruptures when the internal pressure of the cylindrical battery 10 exceeds a predetermined threshold, and the vent part 33A is connected, by welding or the like, to the central part 31B of the internal terminal plate 31 with the opening 32A of the insulating plate 32 interposed therebetween. The insulating plate 32 insulates the internal terminal plate 31 from the external terminal plate 33 around a connection portion therebetween.

The vent part 33A includes a downward projection projecting inward of the battery, and a thin part formed around the downward projection, and is formed at the central part in the radial direction of the external terminal plate 33. In the cylindrical battery 10, the internal terminal plate 31 to which the positive electrode lead 17 is connected is electrically connected to the external terminal plate 33, whereby there is formed a current pathway connecting from the electrode assembly 14 to the external terminal plate 33. If an abnormality occurs in the cylindrical battery 10, which causes an increase in the internal pressure of the cylindrical battery, the internal terminal plate 31 breaks, and the central part 31B is disconnected from the annular part 31A, whereby the vent part 33A is deformed to project outward of the battery. Thus, the current pathway is cut off. If the internal pressure of the cylindrical battery 10 further increases, the vent part 33A ruptures, resulting in formation of a gas venting port.

Note that the structure of the sealing assembly is not limited to the structure illustrated in FIG. 1. The sealing assembly may have a projected sealing assembly cap covering the vent member. The negative electrode lead may be connected to an inner face of the sealing assembly, and the positive electrode lead may be connected to an inner face of the exterior housing can. In this case, the sealing assembly serves as the negative electrode external terminal, and the exterior housing can serves as the positive electrode external terminal.

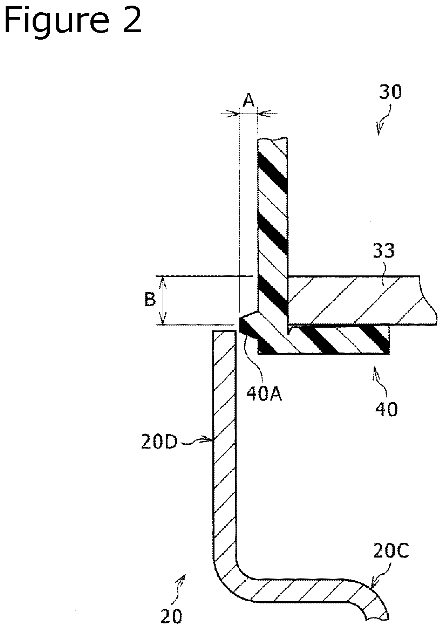

Next, the gasket 40 will be described with reference to FIG. 2. FIG. 2 is a sectional view illustrating the gasket 40 before the sealing assembly 30 is inserted into an opening of the exterior housing can 20.

The gasket 40 is a seal material interposed between the exterior housing can 20 and the sealing assembly 30. According to the gasket 40, a gap between the sealing assembly 30 and the opening of the exterior housing can 20 can be sealed to thereby ensure the sealing properties of the interior of the exterior housing can 20. For the gasket 40 of the present embodiment, a polyolefin-based resin is used, but the material is not limited thereto.

The gasket 40 is formed into a substantially annular shape. The gasket 40 is formed into a substantial L shape when viewed in a cross section in the circumferential direction, before the sealing assembly 30 is crimped to the exterior housing can 20, and is deformed into a substantial C shape when viewed in a cross section in the circumferential direction, after the sealing assembly 30 is crimped to the exterior housing can 20 (see FIG. 1). The gasket 40 has a projection 40A projecting outward in the radial direction on the outer peripheral face.

An upper part of the gasket 40 extends in an up-and-down direction before the sealing assembly 30 is crimped to the exterior housing can 20, and is bent and is sandwiched and compressed between the shoulder part 20D of the exterior housing can 20 and the external terminal plate 33 when the sealing assembly 30 is crimped to the exterior housing can 20.

A lower part of the gasket 40 is disposed between the grooved part 20C of the exterior housing can 20 and the external terminal plate 33 before the sealing assembly 30 is crimped to the exterior housing can 20, and is sandwiched and compressed between the grooved part 20C of the exterior housing can 20 and the external terminal plate 33 when the sealing assembly 30 is crimped to the exterior housing can 20.

The projection 40A projects outward in the radial direction on the outer peripheral face of the gasket 40, as described above. The projection 40A is formed over the entire circumference of the gasket 40. The projection 40A comes into abutment with an inner peripheral face of the lateral face part 20B of the exterior housing can 20, between the grooved part 20C and the shoulder part 20D. Although details will be described later, according to the projection 40A, the electrolyte adhering to the inner peripheral face of the exterior housing can 20 can be scraped off when the sealing assembly 30 is inserted into the opening of the exterior housing can 20. Note that the projection 40A is a portion not compressed when the sealing assembly 30 is crimped to the exterior housing can 20.

An outer diameter (hereinafter, referred to as a gasket maximum diameter) at a tip portion of the projection 40A in the gasket 40 is preferably set to such a length that the tip portion of the projection 40A comes into abutment with the inner peripheral face of the lateral face part 20B of the exterior housing can 20. The maximum diameter of the projection 40A is preferably equal to or larger than an inner diameter of the exterior housing can 20. A length (a length from an outer peripheral face of the gasket 40 to a tip of the projection 40A (a dimension A in the figure)) in the radial direction of the projection 40A is preferably 0.05 to 0.15 mm, for example.

Accordingly, when the sealing assembly 30 is inserted into the opening of the exterior housing can 20, the entire circumference of the projection 40A comes into abutment with the inner peripheral face of the exterior housing can 20 with no gap therebetween, whereby the sealing assembly 30 is inserted into the opening of the exterior housing can 20. In addition, when the sealing assembly 30 and the gasket 40 are inserted into the opening of the exterior housing can 20, a center position of the gasket 40 can be easily aligned with a center position of the opening of the exterior housing can 20 in a plan view. This can improve the workability in the manufacturing process of the cylindrical battery 10.

An outer diameter (hereinafter, referred to as a diameter of the gasket) of a portion in which the projection 40A is not formed in the outer peripheral face of the gasket 40 is preferably smaller than an inner diameter of the exterior housing can 20.

The projection 40A is formed so that a position in the up-and-down direction of the tip portion is located lower than a position of the upper face of the external terminal plate 33. Specifically, a difference (a dimension B in the figure) between the position in the up-and-down direction of the tip portion of the projection 40A and the position in the up-and-down direction of the upper face of the external terminal plate 33 is preferably 1.0 to 1.5 mm. Accordingly, even when the shoulder part 20D of the exterior housing can 20 presses against the upper face of the external terminal plate 33 at the time of crimping, the projection 40A can be prevented from being compressed. In addition, the sealing performance of the sealing assembly 30 can be prevented from being deteriorated.

The cross-sectional shape in the circumferential direction of the projection 40A is not limited to a particular shape, but the shape from a root portion to the tip portion of the projection 40A may have the same width, but is preferably tapered. In the example illustrated in FIG. 2, the cross-sectional shape in the circumferential direction of the projection 40A is a trapezoidal shape. Accordingly, when the sealing assembly 30 and the gasket 40 are inserted into the opening of the exterior housing can 20, the frictional resistance decreases, whereby the sealing assembly 30 and the gasket 40 can be easily inserted.

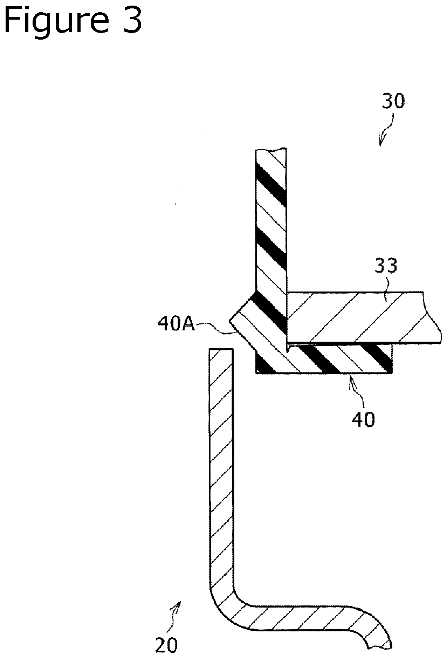

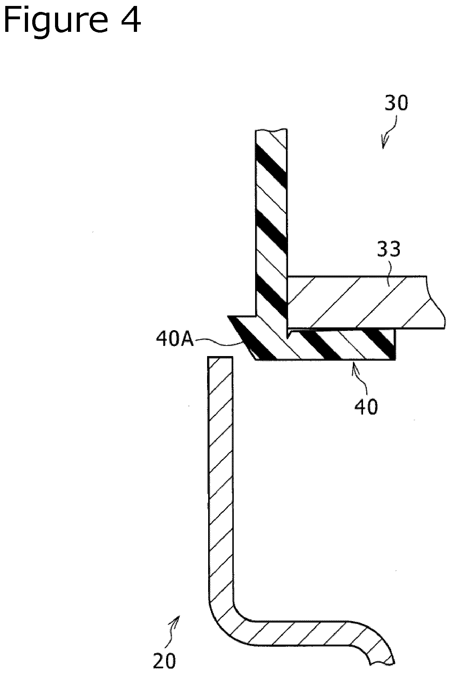

As illustrated in FIG. 3, the cross-sectional shape in the circumferential direction of the projection 40A may be a triangular shape. In addition, as illustrated in FIG. 4, the cross-sectional shape in the circumferential direction of the projection 40A may be such a triangular shape that an oblique side extends to a lower end of the gasket 40.

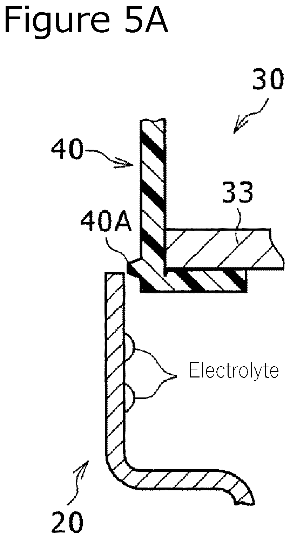

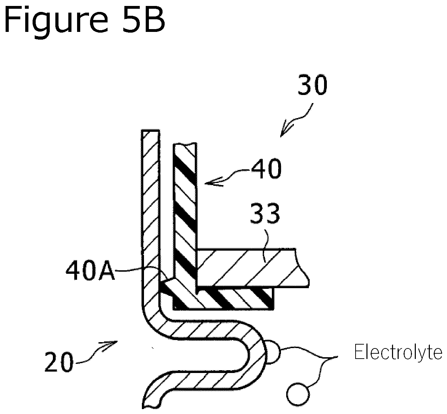

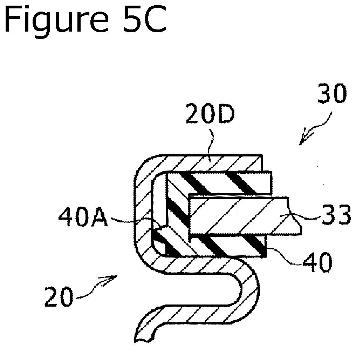

The manufacturing process of the cylindrical battery 10 of an example of an embodiment will be described with reference to FIGS. 5A, 5B, and 5C. FIGS. 5A, 5B, and 5C each are a diagram for describing an assembly process of the sealing assembly 30.

In the manufacturing process of the cylindrical battery 10, the electrode assembly 14 is first inserted into the exterior housing can 20. The sealing assembly 30 is connected to the electrode assembly 14 via the positive electrode lead 17. Next, the grooved part 20C for supporting the sealing assembly 30 is formed in the vicinity of the opening of the exterior housing can 20 by spinning the lateral face part 20B of the exterior housing can 20.

Next, the electrolyte is injected into the exterior housing can 20 until a liquid level position of the electrolyte reaches a position above the grooved part 20C. The electrolyte gradually saturates the electrode assembly 14, and the liquid level position of the electrolyte falls from above to below the grooved part 20C. At this time, the electrolyte may adhere to and remain on the inner peripheral face above the grooved part 20C of the exterior housing can 20.

Next, as illustrated in FIG. 5A, the sealing assembly 30 is inserted into the opening of the exterior housing can 20. When the above-described gasket maximum diameter of the gasket 40 is equal to or larger than the inner diameter of the exterior housing can 20, the entire circumference of the projection 40A comes into abutment with the inner peripheral face of the exterior housing can 20 with no gap therebetween.

Next, as illustrated in FIG. 5B, the sealing assembly 30 is inserted into the opening of the exterior housing can 20. At this time, the electrolyte adhering to the inner peripheral face of the exterior housing can 20 is scraped off by the projection 40A. Even when the gasket maximum diameter is smaller than the inner diameter of the exterior housing can 20, an effect of scraping off the electrolyte is exhibited by forming the projection 40A, but the gasket maximum diameter is preferably equal to or larger than the inner diameter of the exterior housing can 20 as in the present embodiment. The electrolyte scraped off by the projection 40A passes through the grooved part 20C while flowing along the inner peripheral face of the exterior housing can 20, and falls down toward the injected electrode.

Next, as illustrated in FIG. 5C, the opening end of the exterior housing can 20 is crimped, and the sealing assembly 30 is fixed to the opening end of the exterior housing can 20. At this time, the shoulder part 20D is formed into an annular shape in the opening end of the exterior housing can 20.

Effects of the cylindrical battery 10 will be described.
According to the cylindrical battery 10, it is possible to reduce the leakage of the electrolyte to the outside of the cylindrical battery 10.

According to the cylindrical battery 10, the electrolyte adhering to the inner peripheral face of the exterior housing can 20 can be scraped off by the projection 40A formed in the gasket 40 when the sealing assembly 30 is inserted into the exterior housing can 20. Accordingly, when the sealing assembly 30 is crimped to the exterior housing can 20, the electrolyte does not remain between the gasket 40 and the inner peripheral face of the exterior housing can 20. Therefore, it is possible to reduce the leakage of the electrolyte to the outside of the cylindrical battery 10.

In addition, the electrolyte adhering to the inner peripheral face of the exterior housing can 20 is scraped off by the projection 40A when the sealing assembly 30 is inserted into the exterior housing can 20, which makes it possible to reduce variations in electrolyte amount of the cylindrical battery 10. This can reduce the tolerance of the electrolyte amount of the cylindrical battery 10.

Note that the present disclosure is not limited to the above embodiment and modified example, and various changes and improvements are possible within the matters described in the claims of the present application.

### REFERENCE SIGNS LIST

10 Cylindrical battery, 11 Positive electrode, 12 Negative electrode, 13 Separator, 14 Electrode assembly, 15 Insulating plate, 16 Insulating plate, 17 Positive electrode lead, 18 Negative electrode lead, 20 Exterior housing can, 20A Bottom face part, 20C Grooved part, 20D Shoulder part, 30 Sealing assembly, 31 Internal terminal plate, 31A Annular part, 31B Central part, 31C Vent hole, 32 Insulating plate, 32A Opening, 32B Vent hole, 33 External terminal plate, 33A Vent part, 40 Gasket, 40A Projection

## Claims

1. A cylindrical battery, comprising:
an electrode assembly in which a positive electrode and a negative electrode are wound with a separator interposed between the positive electrode and the negative electrode;
an electrolyte;
a bottomed cylindrical exterior housing can that houses the electrode assembly and the electrolyte;
a sealing assembly that seals an opening of the exterior housing can; and
an annular gasket that is interposed between the exterior housing can and the sealing assembly, the sealing assembly being fixed by crimping to an opening end of the exterior housing can with the gasket interposed between the sealing assembly and the exterior housing can, wherein
a projection projecting outward in a radial direction is formed on an outer peripheral face of the gasket, and
the projection comes into abutment with an inner peripheral face of the opening end of the exterior housing can.

2. The cylindrical battery according to claim 1, wherein the projection is formed below an upper face of the sealing assembly.
